# EUROPEAN PATENT SPECIFICATION

(11) **EP 3 303 946 B1**
(45) Date of publication and mention of the grant of the patent: **07.04.2021**
(21) Application number: 16728475.1
(22) Date of filing: 24.05.2016
(51) Int. Cl.: F25B 39/02, F28F 9/02, F25B 13/00

(54) **EVAPORATOR WITH A MULITLEVEL DISTRIBUTION SYSTEM**
VERDAMPFER MIT MEHRSTUFIGEM VERTEILUNGSSYSTEM
ÉVAPORATEUR AVEC UN SYSTÈME DE DISTRIBUTION À NIVEAUX MULTIPLES

(30) Priority: 27.05.2015 US 201562166796 P
(43) Date of publication of application: 11.04.2018
(73) Proprietor: Carrier Corporation, Farmington, Connecticut 06032 (US)
(72) Inventor: CHRISTIANS, Marcel, Syracuse, New York 13057 (US); MOORE, Bryce Kirk, Syracuse, New York 13057 (US)
(74) Representative: Dehns
(86) International application number: PCT/US2016/033913
(87) International publication number: WO 2016/191417

(56) References cited:
- US-A- 6 089 312
- US-A1- 2010 206 535
- US-A1- 2013 277 018

## Description

### BACKGROUND

The subject matter disclosed herein relates to heating, ventilation, air conditioning, and refrigeration (HVAC&R) systems. More specifically, the subject matter disclosed herein relates to evaporators for HVAC&R systems.

HVAC&R systems, such as chillers, use an evaporator to facilitate a thermal energy exchange between a refrigerant in the evaporator and a medium flowing in a number of evaporator tubes positioned in the evaporator. In a flooded evaporator, the tubes are submerged in a pool of refrigerant. This results in a particularly high volume of refrigerant necessary, depending on a quantity and size of evaporator tubes, for efficient system operation. Another type of evaporator used in chiller systems is a falling film evaporator. In a falling film evaporator, the evaporator tubes are positioned typically below a distribution manifold from which refrigerant is urged, forming a "falling film" on the evaporator tubes.

Refrigerant liquid flows in the direction of gravity, falls on the evaporator tubes and evaporates. Evaporation is accomplished through thin film evaporation on the surface of the evaporator tubes. A small fraction of the liquid refrigerant is boiled off in a pool boiling section, typically located below the evaporator tubes. Different methods have been implemented to distribute liquid on the falling film tubes using single-phase gravity feed rather than pressure assisted spray through nozzles. An advantage of gravity feed can include lowering the risk of maldistribution and/or dryout on the evaporator tubes. While it provides superior distribution, this method of gravity feed can rely on considerable amounts of piping, both for vapor-liquid separation and for the subsequent distributed liquid flow network. These volumes can be considerable due to their impact on heat exchanger vessel sizes and liquid charge holdup in the distribution system.

US 2013/277018 A1 discloses a heat exchanger adapted to be used in a vapor compression system.

### BRIEF SUMMARY

According to the invention a falling film evaporator is defined in claim 1 and includes a housing and a plurality of evaporator tubes located at least partially in the housing. A liquid refrigerant distribution system is positioned in the housing and includes a distribution vessel, a manifold having a plurality of manifold outlet openings, and a baffle positioned between the manifold and the distribution vessel and comprising a plurality of baffle openings, the baffle being positioned to be substantially perpendicular to a direction of spray from the plurality of manifold outlet openings. The distribution vessel has a plurality of distribution vessel openings for conveying the liquid refrigerant onto the plurality of evaporator tubes when in use.

Additionally or alternatively, in this or other embodiments a sheath at least partially encloses the manifold and the distribution vessel.

Additionally or alternatively, in this or other embodiments the sheath defines a vapor refrigerant flowpath between the sheath and the distribution vessel to allow for exit of the vapor and liquid refrigerant mixture from the distribution vessel.

Additionally or alternatively, in this or other embodiments the baffle extends between the sheath and the distribution vessel.

Additionally or alternatively, in this or other embodiments the manifold comprises a cylinder, wherein the axial dimension of the cylinder is the largest dimension.

Additionally or alternatively, in this or other embodiments the plurality of spray openings are disposed at an angle of 15 to 60 degrees below horizontal.

Additionally or alternatively, in this or other embodiments the baffle comprises a porous momentum barrier.

Additionally or alternatively, in this or other embodiments the plurality of drip openings are configured to maintain a standing liquid refrigerant level in the distribution vessel when in use under full load conditions.

In another embodiment, a heating, ventilation, air conditioning, and refrigeration (HVAC&R) system includes a condenser flowing a flow of refrigerant therethrough and a falling film evaporator in flow communication with the condenser. The falling film evaporator includes a housing, a plurality of evaporator tubes located at least partially in the housing, and a liquid refrigerant distribution system positioned in the housing. The distribution system includes a distribution vessel, a manifold having a plurality of manifold outlet openings, and a baffle located between the manifold and the distribution vessel and comprising a plurality of baffle openings, the baffle being positioned to be substantially perpendicular to a direction of spray from the plurality of manifold outlet openings. The distribution vessel has a plurality of distribution vessel openings for conveying the liquid refrigerant onto the plurality of evaporator tubes when in us. A compressor receives a flow of vapor refrigerant from the falling film evaporator.

Additionally or alternatively, in this or other embodiments a sheath at least partially enclosing the manifold and the distribution vessel.

Additionally or alternatively, in this or other embodiments the sheath defines a vapor refrigerant flowpath between the sheath and the distribution vessel to allow for exit of the vapor and liquid refrigerant mixture from the distribution vessel.

Additionally or alternatively, in this or other embodiments the baffle extends between the sheath to the distribution vessel.

Additionally or alternatively, in this or other embodiments the manifold comprises a cylinder, wherein the axial dimension of the cylinder is the largest dimension.

Additionally or alternatively, in this or other embodiments the plurality of spray openings are disposed at an angle of 15 to 60 degrees below horizontal.

Additionally or alternatively, in this or other embodiments the baffle comprises a porous momentum barrier.

Additionally or alternatively, in this or other embodiments the plurality of drip openings are configured to maintain a standing liquid refrigerant level in the distribution vessel when in use under full load conditions.

In yet another embodiment, a method of operating an evaporator includes conveying a two-phase vapor and liquid refrigerant mixture to a manifold and spraying the two-phase vapor and liquid refrigerant mixture out of the manifold through a plurality of manifold openings toward a distribution vessel. The vapor and liquid refrigerant mixture in impinged on a baffle located between the manifold and the distribution vessel, the baffle being positioned to be substantially perpendicular to a direction of spray from the plurality of manifold outlet openings, and the liquid refrigerant is separated from the vapor and liquid refrigerant mixture via the impingement. The liquid refrigerant is collected at the distribution vessel.

Additionally or alternatively, in this or other embodiments the liquid refrigerant is conveyed through a plurality of distribution vessel openings onto a plurality of evaporator tubes; and
Additionally or alternatively, in this or other embodiments thermal energy is exchanged between the liquid refrigerant and a heat transfer fluid flowing through the plurality of evaporator tubes.

Additionally or alternatively, in this or other embodiments the vapor refrigerant is conveyed from the vapor and liquid refrigerant mixture from the distribution vessel via a vapor path defined by a vapor sheath and an evaporator housing.

Additionally or alternatively, in this or other embodiments the spraying further comprises directing the two-phase vapor and liquid refrigerant mixture through the plurality of manifold openings at an angle of 15 degrees to 60 degrees below a horizontal centerline of the manifold.

Additionally or alternatively, in this or other embodiments an average liquid refrigerant height is maintained in the distribution vessel between a first height and a second height, wherein the first height is 50% of the second height.

Additionally or alternatively, in this or other embodiments an average liquid refrigerant height in the distribution vessel is maintained such that the flow rate of the liquid refrigerant through the plurality of distribution vessel openings is substantially uniform.

These and other advantages and features will become more apparent from the following description taken in conjunction with the drawings.

### BRIEF DESCRIPTION OF THE DRAWINGS

The subject matter is particularly pointed out and distinctly claimed at the conclusion of the specification. The foregoing and other features, and advantages of the present invention are apparent from the following detailed description taken in conjunction with the accompanying drawings in which:
FIG. 1 is a schematic view of an embodiment of a heating, ventilation and air conditioning system;
FIG. 2 is a schematic view of an embodiment of a falling film evaporator for an HVAC&R system;
FIG. 3 is a cross-sectional view of an embodiment of a refrigerant distributor for a falling film evaporator;
FIG. 4 is a plan view of an embodiment of a refrigerant distributor for a falling film evaporator; and
FIG. 5 is a plan view of another embodiment of a refrigerant distributor for a falling film evaporator.

The detailed description explains embodiments of the present disclosure, together with advantages and features, by way of example with reference to the drawings.

### DETAILED DESCRIPTION

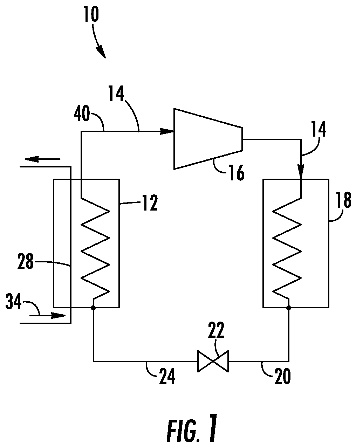

Shown in FIG. 1 is a schematic view of an embodiment of a heating, ventilation, air conditioning, and refrigeration (HVAC&R) system, for example, a chiller 10 utilizing a falling film evaporator 12. A flow of vapor refrigerant 14 is directed into a compressor 16 and then to a condenser 18 that outputs a flow of liquid refrigerant 20 to an expansion valve 22. The expansion valve 22 outputs a vapor and liquid refrigerant mixture 24 toward the evaporator 12, from which vapor refrigerant 14 is returned to the compressor 16.

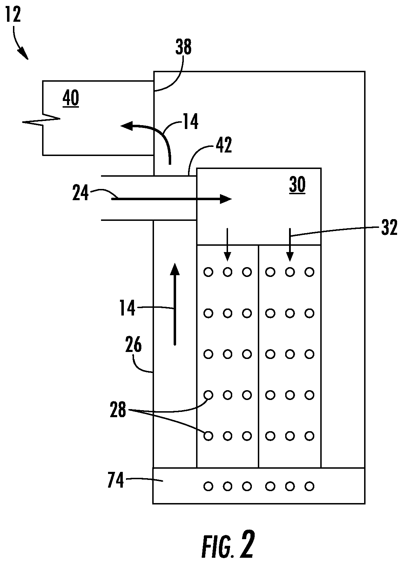

Referring now to FIG. 2, as stated above, the evaporator 12 is a falling film evaporator. The evaporator 12 includes housing 26 with the evaporator 12 components disposed at least partially therein, including a plurality of evaporator tubes 28. A distributor 30 is located above the evaporator tubes 28 to distribute liquid refrigerant 32 over the evaporator tubes 28. A thermal energy exchange occurs between a flow of heat transfer medium 34 (shown in FIG. 1) flowing through the evaporator tubes 28 into and out of the evaporator 12 and the liquid refrigerant 32. As the liquid refrigerant 32 is boiled off in the evaporator 12, the resulting vapor refrigerant 14 is directed to the compressor 16 via a suction nozzle 38 and through a suction line 40.

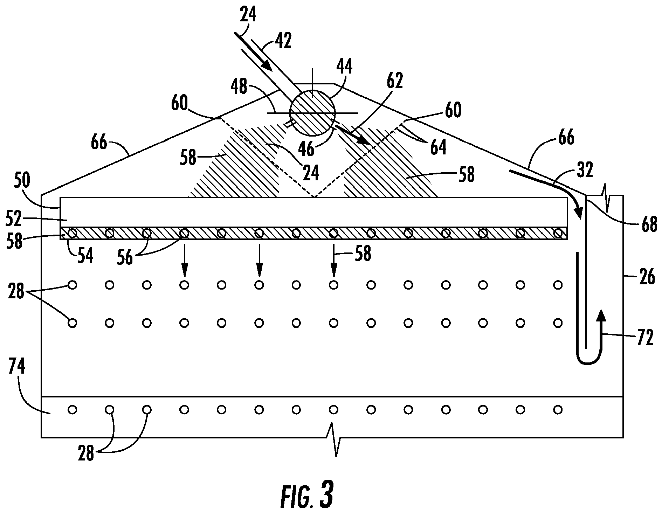

The distributor 30 is illustrated in more detail in FIG. 3. The distributor 30 includes an inlet port 42 through which the vapor and liquid refrigerant mixture 24 enters the distributor 30. The inlet port 42 directs the vapor and liquid refrigerant mixture 24 into a two-phase manifold pipe 44. The manifold pipe 44, located in the distributor 30, may be of any suitable cross-sectional shape, including circular as shown in FIG. 3, elliptical, or polygonal with straight and/or curved sides. The manifold pipe 44 extends along a length and width, both horizontal dimensions, of the distributor 30, as shown in FIG's 4 and 5. The manifold pipe 44 extends at least partially over the plurality of evaporator tubes 28. For example, the largest cross-sectional extent of the manifold pipe 44 can project onto the plurality of evaporator tubes 28 coincident with 10% to 100% of the area of the plurality of evaporator tubes 28 (e.g., the area of the plurality of evaporator tubes 28 as taken from a top view). Referring again to FIG. 3, the manifold pipe 44 includes a plurality of spray orifices 46 arranged along the manifold pipe 44 (please indicate that the arrangement of the orifices can be in any pattern). The spray orifices 46 may be arranged in any pattern along the manifold pipe 44, for example, one or more lengthwise-extending rows, staggered rows, curvilinear or polygonal orifice patterns or the like. For example, one embodiment, as shown, utilizes two lengthwise-extending rows of spray orifices 46. The spray orifices 46 may be uniform in size, or alternatively may vary in size. Further, the spray orifices 46 may be of any suitable shape including, but not limited to, circular, elliptical, polygonal or the like. The plurality of spray orifices 46 are arranged to convey the refrigerant mixture 24 downward toward a distribution vessel 50, with the plurality of spray orifices 46 located at a position below horizontal relative to a center of the cross-section of the manifold pipe 44, as represented at 48. In some embodiments, the plurality of spray orifices 46 are located at about 15 degrees to 60 degrees below horizontal, while in other embodiments, the plurality of spray orifices 46 may be located at, for example, between 10 degrees and 70 degrees or between 5 degrees and 90 degrees relative to horizontal. The spray orifices 46 are sized and arranged for proper function of the manifold pipe 44, so refrigerant mixture 24 remains distributed through the manifold pipe 44 while preventing uncontrolled sputtering of the refrigerant mixture 24 out of the spray orifices 46.

As stated above, the refrigerant mixture 24 is sprayed toward a distribution vessel 50. The distribution vessel 50 includes box ends 52 and an orifice plate 54 forming a bottom face of the distribution vessel 50. The orifice plate 54 includes a plurality of orifices 56 arranged over the bundle of evaporator tubes 28 below. The orifices 56 are sized and spaced such that, at full load conditions, there is a standing liquid refrigerant 58 level, thus using gravity to achieve substantially uniform flow rate of liquid refrigerant 58 through the orifice plate 54 and over the evaporator tubes 28. The height of the standing liquid refrigerant 58 level can vary during operation, but the orifices can be sized such that during steady load the flow rate of liquid refrigerant therethrough can be substantially uniform (e.g., all flow rates through the plurality of orifices are within 85% to 115% of the average flow rate through the plurality of orifices during full, steady state load). As such, the orifices 56 may be of any suitable shape, for example, circular, elliptical or polygonal, or may be configured as slots in the orifice plate 56. Further, the orifices 56 may be arranged in any suitable pattern, for example, in rows, with each row directly above and extending along a length of a particular evaporator tube 28 of the plurality of evaporator tubes 28.

A baffle 60 can be positioned between the spray orifices 46 and the distribution vessel 50. The baffle 60 can be positioned to be substantially perpendicular to a direction of spray 62 from the spray orifices 46. The baffle 60 can be a planar sheet. The baffle 60 may include a plurality of openings 64. The plurality of openings 64 may be of any shape, for example, circular holes or elongated slots. The baffle 60 or portions thereof can include another type of porous momentum barrier, such as a mesh screen. Any combination of the aforementioned baffle constructions is possible, such as a planar baffle including a plurality of circular shaped openings.

A vapor sheath 66 is positioned over the manifold pipe and the distribution vessel 50 such that, in some embodiments, the baffle 60 extends between the vapor sheath 66 and the distribution vessel 50. The vapor sheath 66 defines a vapor path 68 between the vapor sheath 66 and the distribution vessel end 52.

In operation, the two-phase vapor and liquid refrigerant mixture 24 enters the manifold pipe 44 through the inlet port 42. The vapor and liquid refrigerant mixture 24 accumulates in the manifold pipe 44 and is sprayed out of the spray orifices 46. The sprayed vapor and liquid refrigerant mixture 24 impinges on the baffle 60, and passes therethrough, reducing a kinetic energy of the liquid refrigerant 58 portion of the vapor liquid refrigerant mixture 24 such that standing waves and dynamic disturbances produced by downward flow of the liquid refrigerant 58 do not result in significant local deviations in flow rates through the orifices 56 of the orifice plate 54. Such unwanted level disturbances and flow rate deviations can result in flow imbalances from the orifices 56 or dry spots over the surface of the orifice plate 54. The liquid refrigerant 58 settles into the distribution vessel 50 and passes through the plurality of orifices 56 and over the plurality of evaporator tubes 28. After passing through the baffles 60, vapor refrigerant 72 from the vapor and liquid refrigerant mixture 24 exits the distributor 30 through the vapor path 68, making its way between the vapor sheath 66 and the housing 26 and to the suction nozzle 38 (shown in FIG. 2) for return to the compressor 16. The vapor path 68 increases the likelihood that liquid droplets carried out of the distribution system must impinge either on the sheath 66, the evaporator tubes 28 or a liquid surface in a pool boiling section 74 of the evaporator. This can reduce the likelihood that unwanted liquid refrigerant 58 mass will enter the suction nozzle 38 in comparison to other evaporator systems. Correspondingly, the portion of the liquid refrigerant 58 that is evaporated inside of the evaporator 12 can be increased in comparison to other evaporator systems.

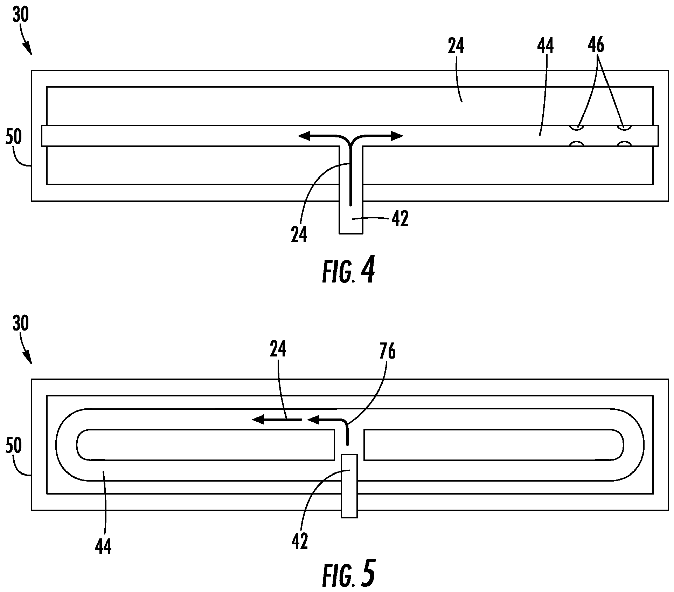

Referring now to FIG. 5, in an embodiment, the manifold pipe 44 can include an elliptical path. This can be especially advantageous in applications where an available pressure drop is insufficient to maintain an even flow rate from the spray orifices 46 along a length of the manifold 44. The inlet port 42 is configured to convey the vapor and liquid refrigerant mixture 24 into the manifold 44 coaxial with a flow direction 76 of the vapor and liquid refrigerant mixture 24 in the manifold 44. A momentum of high velocity flow through the inlet port 42 is added to the recirculating stream of vapor and liquid refrigerant mixture 24, thus providing more uniform flow conditions inside of the manifold 44 and also allows for more even axial distribution of refrigerant from the spray orifices 46, due to the two (or more) pass design.

The evaporator of the present invention retains flow metering benefits of gravity feed through the orifice plate 54, while eliminating the large upstream refrigerant volumes and vessel size requirements that can be characteristic of other vapor-liquid separator and liquid refrigerant piping constructions. This can reduce the overall refrigerant charge of the system and can correspondingly allow for reduced cost and complexity.

Additionally, while various embodiments have been described, it is to be understood that aspects of the present invention may include only some of the described embodiments. Accordingly, the present invention is not to be seen as limited by the foregoing description, but is only limited by the scope of the appended claims.

## Claims

1. A falling film evaporator (12) comprising:
a housing (26):
a plurality of evaporator tubes (28) disposed at least partially in the housing; and a liquid refrigerant distribution system (30) disposed in the housing including:
a distribution vessel (50);
a manifold (44) having a plurality of manifold outlet openings (46);
a baffle (60) disposed between the manifold and the distribution vessel and comprising a plurality of baffle openings (64), the baffle being positioned to be substantially perpendicular to a direction of spray from the plurality of manifold outlet openings,
the distribution vessel having a plurality of distribution vessel openings (56) for conveying the liquid refrigerant onto the plurality of evaporator tubes when in use.

2. The falling film evaporator of Claim 1, further comprising a sheath (66) at least partially enclosing the manifold and the distribution vessel.

3. The falling film evaporator of Claim 2, wherein the sheath defines a vapor refrigerant flowpath (68) between the sheath and the distribution vessel to allow for exit of the vapor and liquid refrigerant mixture from the distribution vessel.

4. The falling film evaporator of Claims 2 or 3, wherein the baffle extends between the sheath and the distribution vessel.

5. The falling film evaporator of any of Claims 1-4, wherein the manifold comprises a cylinder, wherein the axial dimension of the cylinder is the largest dimension.

6. The falling film evaporator of any of Claims 1-5, wherein the plurality of manifold outlet openings are disposed at an angle of 15 to 60 degrees below horizontal.

7. The falling film evaporator of any of Claims 1-6, wherein the baffle comprises a porous momentum barrier.

8. The falling film evaporator of any of Claims 1-7, wherein the plurality of distribution vessel openings are configured to maintain a standing liquid refrigerant level in the distribution vessel when in use under full load conditions.

9. A heating, ventilation, air conditioning, and refrigeration (HVAC&R) system comprising:
a condenser (18) flowing a flow of refrigerant (20) therethrough;
the falling film evaporator of any preceding claim in flow communication with the condenser; and
a compressor (16) to receive a flow of vapor refrigerant (14) from the falling film evaporator.

10. A method of operating an evaporator (12) comprising:
conveying a two-phase vapor and liquid refrigerant mixture (24) to a manifold (44);
spraying the two-phase vapor and liquid refrigerant mixture out of the manifold through a plurality of manifold outlet openings (46) toward a distribution vessel (50);
impinging the vapor and liquid refrigerant mixture on a baffle (60) located between the manifold and the distribution vessel, the baffle being positioned to be substantially perpendicular to a direction of spray from the plurality of manifold outlet openings;
separating the liquid refrigerant from the vapor and liquid refrigerant mixture via the impingement; and
collecting the liquid refrigerant at the distribution vessel.

11. The method of Claim 10, further comprising conveying the liquid refrigerant through a plurality of distribution vessel openings (56) onto a plurality of evaporator tubes (28).

12. The method of Claim 11, further comprising exchanging thermal energy between the liquid refrigerant and a heat transfer fluid (34) flowing through the plurality of evaporator tubes.

13. The method of any of Claims 10-12, further comprising conveying the vapor refrigerant from the vapor and liquid refrigerant mixture from the distribution vessel via a vapor path defined by a vapor sheath (66) and an evaporator housing (26).

14. The method of any of Claims 10-13, wherein the spraying further comprises directing the two-phase vapor and liquid refrigerant mixture through the plurality of manifold outlet openings at an angle of 15 degrees to 60 degrees below a horizontal centerline of the manifold.

15. The method of any of Claims 10-14, further comprising maintaining an average liquid refrigerant height in the distribution vessel between a first height and a second height, wherein the first height is 50% of the second height.

## Patentansprüche

1. Fallfilmverdampfer (12), umfassend:
ein Gehäuse (26);
eine Vielzahl von Verdampferrohren (28), welche sich zumindest teilweise in dem Gehäuse befinden; und
ein Verteilungssystem für flüssiges Kältemittel (30), welches sich in dem Gehäuse befindet, beinhaltend:
einen Verteilungsbehälter (50);
einen Verteiler (44) mit einer Vielzahl von Verteilerauslassöffnungen (46);
ein Umlenkblech (60), welches sich zwischen dem Verteiler und dem Verteilungsbehälter befindet und eine Vielzahl von Umlenkblechöffnungen (64) umfasst, wobei das Umlenkblech so positioniert ist, dass es im Wesentlichen senkrecht zu einer Sprührichtung aus der Vielzahl von Verteilerauslassöffnungen ist,
wobei der Verteilungsbehälter eine Vielzahl von Verteilungsbehälteröffnungen (56) zum Leiten des flüssigen Kältemittels auf die Vielzahl von Verdampferrohren, wenn in Gebrauch, aufweist.

2. Fallfilmverdampfer nach Anspruch 1, weiter eine Hülle (66) umfassend, welche zumindest teilweise den Verteiler und den Verteilungsbehälter umschließt.

3. Fallfilmverdampfer nach Anspruch 2, wobei die Hülle eine Strömungsbahn (68) des dampfförmigen Kältemittels zwischen der Hülle und dem Verteilungsbehälter definiert, um dem dampfförmigen und flüssigen Kältemittelgemisch zu erlauben, den Verteilungsbehälter zu verlassen.

4. Fallfilmverdampfer nach Anspruch 2 oder 3, wobei das Umlenkblech sich zwischen der Hülle und dem Verteilungsbehälter erstreckt.

5. Fallfilmverdampfer nach einem der Ansprüche 1-4, wobei der Verteiler einen Zylinder umfasst, wobei die axiale Dimension des Zylinders die größte Dimension ist.

6. Fallfilmverdampfer nach einem der Ansprüche 1-5, wobei die Vielzahl von Verteilerauslassöffnungen sich in einem Winkel von 15 bis 60 Grad unter der Horizontalen befinden.

7. Fallfilmverdampfer nach einem der Ansprüche 1-6 wobei das Umlenkblech eine poröse Impulsbarriere umfasst.

8. Fallfilmverdampfer nach einem der Ansprüche 1-7, wobei die Vielzahl von Verteilungsbehälteröffnungen konfiguriert sind, um ein bestehendes Niveau des flüssigen Kältemittels in dem Verteilungsbehälter aufrechtzuerhalten, wenn unter vollen Lastbedingungen in Gebrauch.

9. Klimatechniksystem (HVAC&R), umfassend:
einen Kühler (18) durch welchen ein Strom von Kältemittel (20) fließt;
den Fallfilmverdampfer nach einem der vorstehenden Ansprüche, in Strömungsverbindung mit dem Kühler; und
einen Kompressor (16), um einen Strom des dampfförmigen Kältemittels (14) von dem Fallfilmverdampfer zu empfangen.

10. Verfahren zum Betreiben eines Verdampfers (12), umfassend:
Leiten eines zweiphasigen dampfförmigen und flüssigen Kältemittelgemisches (24) an einen Verteiler (44);
Sprühen des zweiphasigen dampfförmigen und flüssigen Kältemittelgemisches aus dem Verteiler durch eine Vielzahl von Verteilerauslassöffnungen (46) zu einem Verteilungsbehälter (50) hin;
Auftreffen des dampfförmigen und flüssigen Kältemittelgemisches auf ein Umlenkblech (60), welches sich zwischen dem Verteiler und dem Verteilungsbehälter befindet, wobei das Umlenkblech so positioniert ist, dass es im Wesentlichen senkrecht zu einer Sprührichtung aus der Vielzahl von Verteilerauslassöffnungen ist;
Trennen des flüssigen Kältemittel von dem dampfförmigen und flüssigen Kältemittelgemisch mittels des Auftreffens; und
Sammeln des flüssigen Kältemittels in dem Verteilungsbehälter.

11. Verfahren nach Anspruch 10, weiter Leiten des flüssigen Kältemittels durch eine Vielzahl von Verteilungsbehälteröffnungen (56) auf eine Vielzahl von Verdampferrohren (28) umfassend.

12. Verfahren nach Anspruch 11, weiter Tauschen von thermischer Energie zwischen dem flüssigen Kältemittel und einem Kälteträger (34) umfassend, welcher durch die Vielzahl von Verdampferrohren fließt.

13. Verfahren nach einem der Ansprüche 10-12, weiter Leiten des dampfförmig Kältemittels aus dem dampfförmigen und flüssigen Kältemittelgemisch aus dem Verteilungsbehälter über einen Dampfweg umfassend, welcher durch eine dampfförmige Hülle (66) und ein Verdampfergehäuse (26) definiert ist.

14. Verfahren nach einem der Ansprüche 10-13, wobei das Sprühen weiter Umleiten des zweiphasigen dampfförmigen und flüssigen Kältemittelgemisches durch die Vielzahl von Verteilerauslassöffnungen in einem Winkel von 15 Grad bis 60 Grad unter der einer horizontalen Mittellinie des Verteilers umfasst.

15. Verfahren nach einem der Ansprüche 10-14, weiter Aufrechterhalten einer durchschnittlichen Höhe des flüssigen Kältemittels in dem Verteilungsbehälter zwischen einer ersten Höhe und einer zweiten Höhe umfassend, wobei die erste Höhe 50 % der zweiten Höhe ist.

## Revendications

1. Évaporateur à film descendant (12) comprenant :
un boîtier (26) ;
une pluralité de tubes d'évaporateur (28) disposés au moins partiellement dans le boîtier ; et
un système de distribution de frigorigène liquide (30) disposé dans le boîtier incluant :
une cuve de distribution (50) ;
un collecteur (44) ayant une pluralité d'ouvertures de sortie de collecteur (46) ;
un déflecteur (60) disposé entre le collecteur et la cuve de distribution et comprenant une pluralité d'ouvertures de déflecteur (64), le déflecteur étant positionné pour être sensiblement perpendiculaire à une direction de pulvérisation depuis la pluralité d'ouvertures de sortie de collecteur,
la cuve de distribution ayant une pluralité d'ouvertures de cuve de distribution (56) pour acheminer le frigorigène liquide sur la pluralité de tubes d'évaporateur lors de l'utilisation.

2. Évaporateur à film descendant selon la revendication 1, comprenant en outre une gaine (66) renfermant au moins partiellement le collecteur et la cuve de distribution.

3. Évaporateur à film descendant selon la revendication 2, dans lequel la gaine définit un passage d'écoulement de vapeur-frigorigène (68) entre la gaine et la cuve de distribution pour permettre la sortie du mélange de vapeur et de frigorigène liquide de la cuve de distribution.

4. Évaporateur à film descendant selon les revendications 2 ou 3, dans lequel le déflecteur s'étend entre la gaine et la cuve de distribution.

5. Évaporateur à film descendant selon l'une quelconque des revendications 1-4, dans lequel le collecteur comprend un cylindre, dans lequel la dimension axiale du cylindre est la plus grande dimension.

6. Évaporateur à film descendant selon l'une quelconque des revendications 1-5, dans lequel la pluralité d'ouvertures de sortie de collecteur sont disposées selon un angle de 15 à 60 degrés sous l'horizontale.

7. Évaporateur à film descendant selon l'une quelconque des revendications 1-6, dans lequel le déflecteur comprend une barrière de survitesse poreuse.

8. Évaporateur à film descendant selon l'une quelconque des revendications 1-7, dans lequel la pluralité d'ouvertures de cuve de distribution sont configurées pour maintenir un niveau de frigorigène liquide permanent dans la cuve de distribution lors de l'utilisation dans des conditions de charge totale.

9. Système de chauffage, ventilation, climatisation et réfrigération (HVAC&R) comprenant :
un condenseur (18) mettant en circulation un écoulement de frigorigène (20) à travers celui-ci ;
l'évaporateur à film descendant selon une quelconque revendication précédente en communication fluidique avec le condenseur ; et
un compresseur (16) pour recevoir un écoulement de frigorigène-vapeur (14) provenant de l'évaporateur à film descendant.

10. Procédé de fonctionnement d'un évaporateur (12) comprenant :
l'acheminement d'un mélange de vapeur et de frigorigène liquide biphasé (24) vers un collecteur (44) ;
la pulvérisation du mélange de vapeur et de frigorigène liquide biphasé hors du collecteur à travers une pluralité d'ouvertures de sortie de collecteur (46) vers une cuve de distribution (50) ;
l'impact du mélange de vapeur et de frigorigène liquide sur le déflecteur (60) situé entre le collecteur et la cuve de distribution, le déflecteur étant positionné pour être sensiblement perpendiculaire à une direction de pulvérisation depuis la pluralité d'ouvertures de sortie de collecteur ;
la séparation du frigorigène liquide du mélange de vapeur et de frigorigène liquide par l'intermédiaire de l'impact ; et
la collecte du frigorigène liquide au niveau de la cuve de distribution.

11. Procédé selon la revendication 10, comprenant en outre l'acheminement du frigorigène liquide à travers une pluralité d'ouvertures de cuve de distribution (56) sur une pluralité de tubes d'évaporateur (28).

12. Procédé selon la revendication 11, comprenant en outre l'échange d'énergie thermique entre le frigorigène liquide et un fluide caloporteur (34) circulant à travers la pluralité de tubes d'évaporateur.

13. Procédé selon l'une quelconque des revendications 10-12, comprenant en outre l'acheminement du frigorigène-vapeur du mélange de vapeur et de frigorigène liquide de la cuve de distribution par l'intermédiaire d'un trajet de vapeur défini par une gaine de vapeur (66) et un boîtier d'évaporateur (26).

14. Procédé selon l'une quelconque des revendications 10-13, dans lequel la pulvérisation comprend en outre l'orientation du mélange de vapeur et de frigorigène liquide biphasé à travers la pluralité d'ouvertures de sortie de collecteur selon un angle de 15 degrés à 60 degrés sous une ligne centrale horizontale du collecteur.

15. Procédé selon l'une quelconque des revendications 10-14, comprenant en outre le maintien d'une hauteur de frigorigène liquide moyenne dans la cuve de distribution entre une première hauteur et une seconde hauteur, dans lequel la première hauteur représente 50 % de la seconde hauteur.
